# EUROPEAN PATENT SPECIFICATION

(11) **EP 4 043 759 B1**
(45) Date of publication and mention of the grant of the patent: **17.04.2024**
(21) Application number: 22156228.3
(22) Date of filing: 10.02.2022
(51) Int. Cl.: F16H 61/421, F16H 61/472

(54) **CONTROL METHOD OF A HYDRAULIC TRANSMISSION OF AN AGRICULTURAL VEHICLE OR EARTH-MOVING MACHINE AND AGRICULTURAL VEHICLE OR EARTH-MOVING MACHINE IMPLEMENTING THE METHOD**
VERFAHREN ZUR STEUERUNG EINES HYDRAULISCHEN GETRIEBES EINES LANDWIRTSCHAFTLICHEN FAHRZEUGS ODER EINER ERDBEWEGUNGSMASCHINE UND LANDWIRTSCHAFTLICHES FAHRZEUG ODER ERDBEWEGUNGSMASCHINE ZUR DURCHFÜHRUNG DES VERFAHRENS
PROCÉDÉ DE COMMANDE D'UNE TRANSMISSION HYDRAULIQUE D'UN VÉHICULE AGRICOLE OU D'UN ENGIN DE TERRASSEMENT ET VÉHICULE AGRICOLE OU ENGIN DE TERRASSEMENT METTANT EN OEUVRE LE PROCÉDÉ

(30) Priority: 12.02.2021 IT 202100003239
(43) Date of publication of application: 17.08.2022
(73) Proprietor: CNH Industrial Italia S.p.A., 10156 Torino (IT)
(72) Inventor: Garramone, Adriano, 73100 Lecce (IT); Gravili, Andrea, 73100 Lecce (IT); Liberti, Stefano, 73100 Lecce (IT)
(74) Representative: CNH Industrial IP Department

(56) References cited:
- DE-A1-102007 003 956
- US-A1- 2004 020 703
- US-A1- 2009 238 696
- US-A1- 2010 089 051
- US-A1- 2014 012 472

## Description

### Field of the invention

The present invention relates to the field of hydraulic transmissions and in particular to the field of those transmissions implementing two operating modes: a first mode in which the hydraulic motor is forced to the maximum displacement to perform operations at very low speed and a second operating mode in which the displacement of the hydraulic motor varies according to the perceived load to perform operations at higher speed.

### State of the art

In agricultural and earth-moving machinery, the transmission to transfer motion from a prime mover to the wheels is of the hydraulic type. Often the transmission defines a series configuration, in which the prime mover drives a variable displacement hydraulic pump, which, in turn, drives a hydraulic motor which can have either fixed or variable displacement as shown in US2004/020703A. Obviously, there are no further mechanical parts that contribute to the rotation of the wheel except the hydraulic motor.

The pump and the hydraulic motor are interconnected in a per se known manner by means of a so-called hydraulic delivery line and a hydraulic return line.

Between the hydraulic motor and the wheels there is often, but not always, a gearbox with discrete ratios. Often there are just two gear ratios, to facilitate the autonomous movement of the vehicle from one workplace to another workplace.

Regardless of the presence of a discreet gearbox, agricultural machines are often used to perform operations at very low speeds, that is to say for speeds below 1 - 2 km/h.

For an agricultural vehicle, a typical operation that requires such speed is sowing, in which a device connected to the vehicle inserts at least one seed into the ground with great precision and with predetermined distance between one seed and another.

For an earthmoving machine, a typical operation that requires such speed is the impact-free approach to a truck to unload the material from the tool.

Under these operating conditions, the variable displacement hydraulic motor is forced to its maximum displacement so as to express a high transmission ratio, resulting in low speed and high torque.

Therefore, an operating mode often called "Turtle" is identified, because the vehicle can move very slowly but with high torque, and a second operating mode is called "Rabbit".

Switching between one mode and another is generally operated by means of a button or other man/machine interface device present in the vehicle cabin.

When the transmission operates in Rabbit mode, the displacement of the hydraulic motor depends exclusively on the load perceived by the wheel. Thus, the displacement of the hydraulic motor is inversely proportional to the speed of the vehicle.

Although there are hydraulic motors whose displacement can be electrically controlled in an approximately continuous way, most of the hydraulic motors for earth moving machines and agricultural vehicles provide the possibility to force the motor only to its maximum displacement. For convenience, such hydraulic motors are defined as ON/OFF motors, meaning that it is not possible to control the displacement in other ways.

Generally, the speed of rotation of the prime mover is directly proportional to the position of the accelerator lever and the displacement of the pump is directly proportional to the rotational speed of the prime mover. Consequently, the speed of the vehicle and the speed of rotation of the prime mover are approximately directly proportional to each other. This operating mode is for convenience defined as "accelerator-base", since the rotation speed of the prime mover is approximately directly proportional to the position of the accelerator lever and the vehicle speed depends at least on the rotational speed of the prime mover, as there is a circa linear relationship between the speed of rotation of the prime mover and the signal that controls the displacement of the hydraulic pump. The term "circa" indicates that the control is in open loop, therefore an increase in the slope, ie the load, intervenes on the hydraulic motor and also on the hydraulic pump, the first increasing the displacement and the second reducing the relative displacement.

When the transmission is set in Rabbit mode, this has a low ability to brake when the accelerator is fully released, therefore, when performing precision operations there is a risk of hitting surrounding objects.

Some operators, to overcome this problem, operate in Turtle mode, but this leads to an excessive lengthening of processing times.

### Summary of the invention

The purpose of the present invention is to indicate an automatic switching method between the two operating conditions described above, which make it easier and more comfortable to use an agricultural vehicle or an earth-moving machine.

The basic idea of the present invention is to automatically switch to Turtle mode, from Rabbit mode, for a predetermined time interval, when the following two conditions occur simultaneously: the accelerator pedal is released and reaches a position below of a predetermined threshold and the vehicle speed is below a predetermined threshold.

In other words, the Turtle mode is activated in an impulsive way, i.e. for a limited time interval, preferably less than 1 second.

According to a first preferred variant of the invention, the transmission automatically switches to Rabbit mode when the vehicle stops, ie its speed is lower than a second threshold lower than the first threshold.

According to a second preferred variant of the invention, the transmission automatically switches to Rabbit mode at the end of said time interval.

According to a third preferred variant of the invention, the transmission automatically switches to Rabbit mode when the accelerator pedal exceeds a second threshold greater than the first threshold.

According to a fourth preferred variant of the invention, the transmission automatically switches to Rabbit mode upon occurrence at the end of said time interval or when the accelerator pedal exceeds a second threshold greater than the first. In other words, the fourth variant is an OR combination of the second and third variant, in the sense that it is sufficient for a condition to be met to return to Rabbit mode from Turtle.

A fifth preferred variant of the invention may be an OR combination of the first and third variant. Finally, a sixth preferred variant of the invention can be an OR combination of the first, second and third variant.

According to a further preferred variant of the invention, when the accelerator pedal is released and reaches a position below the aforementioned first threshold and the vehicle speed exceeds the aforementioned first threshold, but is less than a second threshold greater than the first, then two or more switchings from Rabbit to Turtle are performed following a scheme that allows a predetermined deceleration to be given to the vehicle.

In other words, a train of activations of the Turtle mode is performed to impose a braking on the vehicle preferably modulated according to the speed of the vehicle.

Preferably, in these operating conditions, the changeover in Turtle is performed for sufficiently short time intervals to avoid hydraulic motor damaging, but repeated in order to obtain a sensitive brake offered by the hydraulic transmission.

In other words, as the vehicle speed increases, the activation of Turtle mode is increasingly impulsive, with an increase in repetitions over time.

Obviously, the second speed threshold is chosen in such a way as not to damage the hydraulic motor.

The dependent claims describe preferred variants of the invention.

### Brief description of the figures

Further objects and advantages of the present invention will become clear from the following detailed description of an example of its embodiment (and its variants) and from the attached drawings given purely by way of non-limiting explanation, in which:
Figure 1 shows an example of hydraulic transmission in series configuration with in evidence processing means configured to supervise and control the hydraulic transmission according to the method object of the present invention;
Figure 2 shows an exemplary flow chart of a preferred variant of the present invention.

The same reference numbers and letters in the figures identify the same elements or components or functions.

It should also be noted that the terms "first", "second", "third", "upper", "lower" and the like can be used here to distinguish various elements. These terms do not imply a spatial, sequential or hierarchical order for the modified elements unless specifically indicated or inferred from the text.

### Detailed descpription of exemplary embodiments

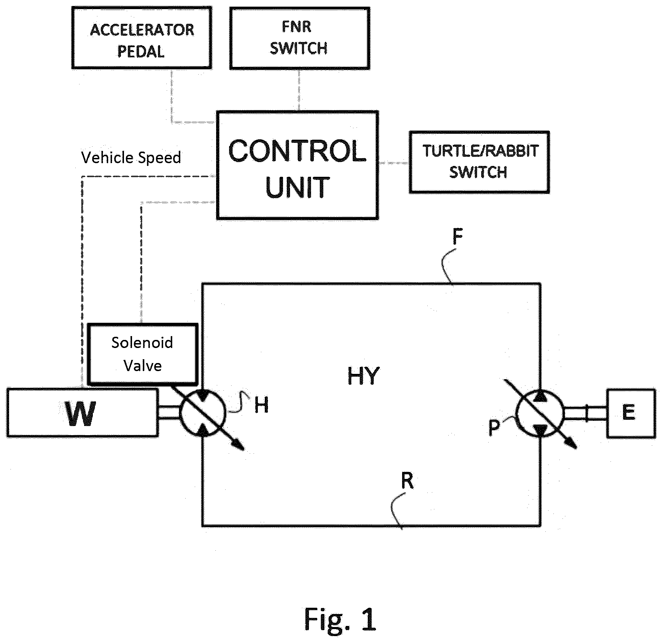

Figure 1 shows a propulsion system and in particular a hydraulic transmission of a series-type agricultural vehicle, wherein a vehicle wheel W is driven in rotation by a hydraulic motor H of a hydrostat HY which comprises a hydraulic pump P, by means of a forward line F and a return line R.

Generally, when a "FNR SWITCH" selector selects forward gear, a valve (not shown) controls the hydraulic pump so that it pressurizes the forward line, while when the selector selects reverse gear, the same valve or another valve controls the hydraulic pump so that it pressurizes the return line.

The hydraulic motor is of the variable displacement type, in which the displacement is variable and is a function of a load applied to the wheel according to a first operating mode, generally defined Rabbit, since, in this operating mode, the vehicle can reach a relative maximum speed.

The hydraulic motor can be forced to its maximum displacement by activating a command signal, according to a second operating mode, generally called Turtle, in which the vehicle moves slowly and with the maximum available torque. The hydraulic motor may not otherwise be controllable to assume displacements different from the maximum one. In fact, when the control signal is deactivated, the displacement of the hydraulic motor depends exclusively on the resistant torque applied to to the wheel W.

A "TURTLE/RABBIT SWITCH" selector controls a "Solenoid Valve" arranged to force the hydraulic motor to maximum displacement.

The accelerator lever "ACCELERATOR PEDAL" controls the prime mover E, generally an internal combustion engine in a per se known manner.

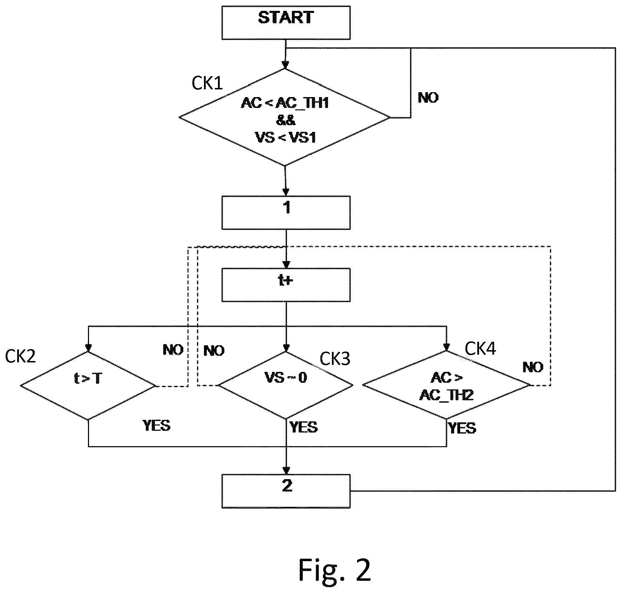

A processing unit "Control Unit" is responsible for controlling the hydrostat HY, on the basis of the signals generated by the aforementioned selectors, levers, etc. It, among other things, receives an input signal representative of the vehicle speed "VehicleSpeed ", for brevity "VS" in figure 2.

This method finds application, especially in those transmissions in which it is not possible to alter the displacement of the hydraulic motor except bringing it to the relative maximum displacement.

The method object of the present invention provides for automatically activating the Turtle mode, from the Rabbit mode, for a predetermined time interval, when two conditions occur simultaneously:
- the accelerator pedal is released and reaches a position below a predetermined threshold AC_TH1 and
- the vehicle speed is below a predetermined threshold VS1. Preferably, the accelerator pedal threshold is set at a few tens of percentage units, for example between 5 and 15% of the maximum opening of the accelerator.

Preferably, the speed threshold is selected in the open range 0.5 - 8 km/h and more preferably it is set at 1 km/h. Preferably, the time interval is set at no more than 1 second.

Preferably, the transmission automatically returns to Rabbit as soon as at least one of the following operating conditions occurs:
- the vehicle stops,
- the accelerator lever exceeds a second threshold AC_TH2 greater than the first threshold,
- said predetermined time interval ends.

It is clear that the vehicle can stop before the aforementioned time interval has ended. Similarly, the driver can act on the accelerator lever before the aforementioned time interval ends.

Therefore, the control of the transmission is preferably recursive so that when the Rabbit mode is active, upon the occurrence of the above conditions, the transmission first switches to Turtle mode and immediately afterwards returns to Rabbit mode.

All of this is transparent for the driver, who, however, benefits from increased vehicle control when the accelerator pedal is released.

According to a preferred variant of the invention, when the accelerator lever is released and reaches a position below the aforementioned predetermined threshold AC_TH1 and the vehicle speed exceeds the aforementioned first threshold VS1, but is lower than a second threshold greater than the first , then two or more switchings from Rabbit to Turtle are performed following a scheme that allows to impart a predetermined deceleration to the vehicle. In other words, Turtle mode is repeatedly activated and deactivated in order to force the vehicle to slow down.

The duration of each pulse and the frequency of the control pulses for the displacement of the hydraulic motor can be modulated for example as a function of the vehicle speed. Preferably, in these operating conditions, the changeover in Turtle is performed for sufficiently short time intervals to avoid damage to the hydraulic motor.

For example, if the dynamics of the hydraulic motor is such that it takes 200 ms to reach the maximum displacement, then the duration of the signal pulse that forces the hydraulic motor to the maximum displacement can be limited to a fraction strictly less than 1 of 200 ms, in order to avoid reaching the maximum displacement when this can damage the hydraulic motor.

In other words, as the vehicle speed increases, the activation of the Turtle mode is increasingly impulsive, thus being able to manipulate not only the pulse duration but also the frequency of the pulses over time.

Obviously, the second speed threshold is chosen in such a way as not to damage the hydraulic motor. Therefore, if for example the first threshold is set at 1 km/h, then the second threshold can be set at 5 km/h.

Advantageously, although it is not possible to control the displacement of the hydraulic motor if not bringing it to the relative maximum displacement, it is possible to modulate the braking effect and the effects of vehicle deceleration which are discharged on the hydraulic transmission and in particular on the hydraulic motor itself and on the hydraulic line, opposite to the pressurized one, in relation to the vehicle travel direction, therefore the return line when the vehicle is braked in forward travel and vice versa the forward line when the vehicle is braked in reverse.

Figure 2 shows an exemplary flow chart of the method object of the present invention.

The method begins with the (implicit) acquisition of the signals related to the signal generated at the accelerator lever AC and the vehicle speed VS.

When at the first block CK1 it is found that the two conditions AC <AC_TH1 && VS <VS1 are met, then Step 1 is performed which causes the activation of Turtle mode.

At this point a counter t+ is triggered and the corresponding conditions CK2, CK3, CK4 occur separately respectively
- upon reaching a predetermined time interval T i.e. t> T,
- when the vehicle stops, i.e. VS about 0 e
- at the accelerator signal AC > AC_TH2.

As soon as any of these conditions are met then Step 2 is performed which causes you to return to Rabbit mode.

The present invention can be advantageously implemented by means of a computer program which comprises coding means for carrying the method, when this program is executed on a computer. Therefore it is intended that the scope of protection extends to said computer program and further to computer readable means comprising a recorded message, said computer readable means comprising program coding means for carrying out the method, when said program is run on a computer.

From the above description, the person skilled in the art is able to realize the object of the invention without introducing further construction details.

## Claims

1. Control method of a hydraulic transmission of an agricultural vehicle or earth-moving machine, wherein the hydraulic transmission is of the series type, wherein a vehicle wheel (W) is connected to a hydraulic motor (H) wherein a hydraulic pump (P) is arranged to power said hydraulic motor, the hydraulic motor (H) being of variable displacement wherein the displacement is
- variable and function of a load applied to the vehicle wheel (W) by defining a first operating mode or
- fixed at a predetermined maximum displacement value due to the activation of a command signal (TURTLE/RUBBIT SWITCH), defining a second operating mode,
the method being **characterized in that** it comprises a first step (Step 1) of automatically activating said command signal for a predetermined time interval (T) when an accelerator signal (AC) is lower than a predetermined threshold (AC_TH1) and the vehicle speed (VS) is lower than a first speed threshold (VS1).

2. Method according to claim 1, further comprising a second step (Step 2) of automatically deactivating said command signal, when at least one of the following conditions occurs:
- the vehicle stops,
- the accelerator lever exceeds a second threshold (AC_TH2) greater than the first threshold (AC_TH1),
- the end of said predetermined time interval (T).

3. Method according to any one of the preceding claims, wherein when the accelerator pedal is below the aforementioned predetermined threshold (AC_TH1) and the vehicle speed exceeds the aforementioned first threshold (VS1), but is below a second threshold (VS2) greater than the first (VS1), then two or more alternate activations of said control signal are carried out so as to impart a predetermined deceleration to the vehicle.

4. Method according to claim 3, wherein said two or more alternate activations define a train of activation pulses of the command signal.

5. Method according to claim 3 or 4, wherein the activation time interval of the command signal has an amplitude lower than the dynamics of the hydraulic motor.

6. Method according to any one of claims 3 - 5, wherein an activation frequency of the control signal and an amplitude of the time interval of each activation is a function of the vehicle speed.

7. Method according to any one of the preceding claims, wherein said first speed threshold is in the range 0.5 - 8 km/h and/or wherein said first accelerator signal threshold (AC_TH) is selected in the range between 5 and 15 % of its maximum value.

8. Method according to claim 7, wherein said first speed threshold is equal to 1 km/h and/or wherein said first speed threshold is equal to 1 km/h and said second speed threshold is equal to 5 km/h.

9. Computer program comprising program coding means adapted to carry out all the steps of any one of claims 1 to 8, when said program is run on a computer.

10. Computer readable means comprising a recorded program, said computer readable means comprising program coding means adapted to perform all steps of any one of claims 1 to 8, when said program is run on a computer.

11. Agricultural vehicle or earth-moving machine comprising a series-type hydraulic transmission and configured to carry out the method of claim 1.

## Patentansprüche

1. Steuerungsverfahren für ein hydraulisches Getriebe eines landwirtschaftlichen Fahrzeugs oder einer Erdbaumaschine, wobei das hydraulische Getriebe von einem seriellen Typ ist, wobei ein Fahrzeugrad (W) mit einem Hydraulikmotor (H) verbunden ist, wobei eine Hydraulikpumpe (P) dazu eingerichtet ist, den Hydraulikmotor anzutreiben, wobei der Hydraulikmotor (H) eine variable Verdrängung aufweist, wobei die Verdrängung
- variabel und abhängig von einer Last ist, mit der das Fahrzeugrad (W) beaufschlagt wird, durch Definieren eines ersten Betriebsmodus oder
- auf einen vorbestimmten maximalen Verdrängungswert festgelegt ist durch das Aktivieren eines Befehlsignals (Schildkröte/Hasen-Schalter), der einen zweiten Betriebsmodus definiert,
wobei das Verfahren **dadurch gekennzeichnet ist, dass** es einen ersten Schritt (Schritt 1) eines automatischen Aktivierens des Befehlsignals für ein vorbestimmtes Zeitintervall (T) aufweist, wenn ein Gaspedalsignal (AC) kleiner als ein vorbestimmter Grenzwert (AC_TH1) ist und die Fahrzeuggeschwindigkeit (VS) kleiner ein erster Geschwindigkeitsgrenzwert (VS1) ist.

2. Verfahren nach Anspruch 1, das des Weiteren einen zweiten Schritt (Schritt 2) eines automatischen Deaktivierens des Befehlsignals aufweist, wenn mindestens eine der folgenden Bedingungen eintritt:
- das Fahrzeug anhält,
- das Gaspedal einen zweiten Grenzwert (AC_TH2) überschreitet, der größer als der erste Grenzwert (AC_TH1) ist,
- das Ende des vorbestimmten Zeitintervalls (T) erreicht ist.

3. Verfahren nach einem der vorhergehenden Ansprüche, wobei, wenn sich das Gaspedal unter dem zuvor genannten vorbestimmten Grenzwert (AT_TH1) befindet und die Fahrzeuggeschwindigkeit den zuvor genannten Grenzwert (VS1) überschreitet, aber unter einem zweiten Grenzwert (VS2) liegt, der größer als der erste Grenzwert (VS1) ist, zwei oder mehr abwechselnde Aktivierungen des Befehlsignals ausgeführt werden, um dem Fahrzeug eine vorbestimmte Verzögerung zu verleihen.

4. Verfahren nach Anspruch 3, wobei die zwei oder mehr abwechselnden Aktivierungen eine Folge von Aktivierungspulsen des Befehlsignals definieren.

5. Verfahren nach Anspruch 3 oder 4, wobei das Aktivierungszeitintervall des Befehlsignals eine Amplitude aufweist, die geringer als die Dynamik des Hydraulikmotors ist.

6. Verfahren nach einem der Ansprüche 3 bis 5, wobei eine Aktivierungsfrequenz des Befehlsignals und eine Amplitude des Zeitintervalls jeder Aktivierung von der Fahrzeuggeschwindigkeit abhängig sind.

7. Verfahren nach einem der vorhergehenden Ansprüche, wobei der erste Geschwindigkeitsgrenzwert in dem Bereich von 0,5 bis 8 km/h liegt und/oder wobei der erste Gaspedalsignalgrenzwert (AC_TH) aus dem Bereich zwischen 5 und 15 % von dessen Maximalwert gewählt wird.

8. Verfahren nach Anspruch 7, wobei der erste Geschwindigkeitsgrenzwert gleich 1 km/h ist und/oder wobei der erste Geschwindigkeitsgrenzwert gleich 1 km/h ist und der zweite Geschwindigkeitsgrenzwert gleich 5 km/h ist.

9. Computerprogramm, das ein Programmkodierungsmittel aufweist, das dazu ausgebildet ist, alle Schritte nach einem der Ansprüche 1 bis 8 auszuführen, wenn das Programm auf einem Computer ausgeführt wird.

10. Computerlesbares Mittel mit einem gespeicherten Programm, wobei das computerlesbare Mittel ein Programmkodierungsmittel aufweist, das dazu ausgebildet ist, alle Schritte nach einem der Ansprüche 1 bis 8 auszuführen, wenn das Programm auf einem Computer ausgeführt wird.

11. Landwirtschaftliches Fahrzeug oder Erdbaumaschine mit einem seriellen Hydraulikgetriebe und dazu eingerichtet, das Verfahren nach Anspruch 1 auszuführen.

## Revendications

1. Procédé de commande d'une transmission hydraulique d'un véhicule agricole ou d'un engin de terrassement, dans lequel la transmission hydraulique est du type série, dans lequel une roue de véhicule (W) est raccordée à un moteur hydraulique (H) dans lequel une pompe hydraulique (P) est agencée pour alimenter ledit moteur hydraulique, le moteur hydraulique (H) étant de cylindrée variable dans lequel la cylindrée est
- variable et fonction d'une charge appliquée à la roue du véhicule (W) en définissant un premier mode de fonctionnement ou
- fixée à une valeur de cylindrée maximale prédéterminée en raison de l'activation d'un signal de commande (LEVIER LIÈVRE/TORTUE), définissant un second mode de fonctionnement,
le procédé étant **caractérisé en ce qu'**il comprend une première étape (Étape 1) d'activation automatique dudit signal de commande pendant un intervalle de temps prédéterminé (T) lorsqu'un signal d'accélération (AC) est inférieur à un seuil prédéterminé (AC THI) et que la vitesse du véhicule (VS) est inférieure à un premier seuil de vitesse (VSI).

2. Procédé selon la revendication 1, comprenant en outre une seconde étape (Étape 2) de désactivation automatique dudit signal de commande, lorsqu'au moins une des conditions suivantes se produit :
- le véhicule s'arrête,
- le levier d'accélération dépasse un second seuil (AC TH2) supérieur au premier seuil (AC THI),
- la fin dudit intervalle de temps prédéterminé (T).

3. Procédé selon l'une quelconque des revendications précédentes, dans lequel lorsque la pédale d'accélération est inférieure au seuil prédéterminé précité (AC THI) et que la vitesse du véhicule excède le premier seuil précité (VSI), mais qu'elle est inférieure à un second seuil (VS2) supérieur au premier (VSI), alors deux ou plusieurs activations alternatives dudit signal de commande sont effectuées de manière à transmettre une décélération prédéterminée au véhicule.

4. Procédé selon la revendication 3, dans lequel lesdites deux ou plusieurs activations alternées définissent un train d'impulsions d'activation du signal de commande.

5. Procédé selon la revendication 3 ou la revendication 4, dans lequel l'intervalle de temps d'activation du signal de commande a une amplitude inférieure à la dynamique du moteur hydraulique.

6. Procédé selon l'une quelconque des revendications 3 à 5, dans lequel une fréquence d'activation du signal de commande et une amplitude de l'intervalle de temps de chaque activation sont fonction de la vitesse du véhicule.

7. Procédé selon l'une quelconque des revendications précédentes, dans lequel ledit premier seuil de vitesse est compris entre 0,5 et 8 km/h et/ou dans lequel ledit premier seuil du signal d'accélération (AC TH) est choisi entre 5 et 15 % de sa valeur maximale.

8. Procédé selon la revendication 7, dans lequel ledit premier seuil de vitesse est égal à 1 km/h et/ou dans lequel ledit premier seuil de vitesse est égal à 1 km/h et ledit second seuil de vitesse est égal à 5 km/h.

9. Programme informatique comportant des moyens pour coder un programme, adapté pour réaliser toutes les étapes de l'une quelconque des revendications 1 à 8, lorsque ledit programme est exécuté sur un ordinateur.

10. Moyens lisibles par ordinateur comprenant un programme enregistré, lesdits moyens lisibles par ordinateur comprenant des moyens de codage de programme adaptés pour effectuer toutes les étapes de l'une quelconque des revendications 1 à 8, lorsque ledit programme est exécuté sur un ordinateur.

11. Véhicule agricole ou engin de terrassement comprenant une transmission hydraulique de type série et configuré pour mettre en oeuvre le procédé de la revendication 1.
